# EUROPEAN PATENT APPLICATION

(11) **EP 4 838 963 A1**
(43) Date of publication of application: **11.11.2026**
(21) Application number: 25751203.8
(22) Date of filing: 21.01.2025
(51) Int. Cl.: H04W 52/02, H04W 24/02

(54) **COMMUNICATION METHOD AND COMMUNICATION APPARATUS**

(30) Priority: 06.02.2024 CN 202410171609
(71) Applicant: Huawei Technologies Co., Ltd., Shenzhen, Guangdong 518129 (CN)
(72) Inventor: HUANG, Xiuxuan, Shenzhen, Guangdong 518129 (CN); DING, Mengying, Shenzhen, Guangdong 518129 (CN); CHENG, Yan, Shenzhen, Guangdong 518129 (CN); PENG, Jinlin, Shenzhen, Guangdong 518129 (CN)
(74) Representative: Huawei European IPR
(86) International application number: PCT/CN2025/073723
(87) International publication number: WO 2025/167601

(57) **Abstract**

This application provides a communication method and apparatus that can be used in a carrier aggregation scenario, to reduce power consumption of a network device and improve system performance. The method includes: The network device periodically sends a first SSB signal, receives first indication information from a terminal device, and periodically sends a second SSB signal based on the first indication information. A transmission periodicity of the second SSB signal is less than a transmission periodicity of the first SSB signal.

## Description

This application claims priority to Chinese Patent Application No. 202410171609.9, filed with the China National Intellectual Property Administration on February 6, 2024 and entitled "COMMUNICATION METHOD AND COMMUNICATION APPARATUS", which is incorporated herein by reference in its entirety.

### TECHNICAL FIELD

This application relates to the field of wireless communication, and more specifically, to a communication method and a communication apparatus.

### BACKGROUND

In carrier aggregation (carrier aggregation, CA) technology, a primary cell (primary cell, PCell) is responsible for radio resource control (radio resource control, RRC) communication with a user equipment (user equipment, UE). A secondary cell (secondary cell, SCell) is added during RRC reconfiguration, to provide additional radio resources. In secondary cell configuration scenarios, the user equipment needs to measure synchronization signal (synchronization signal, SS) and physical broadcast channel (physical broadcast channel, PBCH) blocks (blocks), that is, SSB signals, that are sent in a candidate cell. The cell can be configured as a secondary cell only when signal quality of the cell meets a specific condition. Alternatively, in a secondary cell handover scenario, the user equipment needs to measure SSB signals in a target cell. The user equipment is handed over to the new target cell only when signal quality of the target cell is good. In addition, upon completion of the secondary cell configuration, the secondary cell is in a deactivated state by default. When there is a service transmission requirement, a network side initiates an activation process for the secondary cell. In this case, the user equipment performs channel state information (channel state information, CSI) measurement based on SSB signals in a to-be-activated secondary cell, and reports measurement results to a network device, to activate the secondary cell.

Currently, in scenarios that do not require secondary cell configuration, handover, activation, or the like, the network device constantly sends SSB signals in a broadcast manner, resulting in high power consumption of the network device.

### SUMMARY

This application provides a communication method and apparatus, to reduce power consumption of a network device and improve system performance.

According to a first aspect, an embodiment of this application provides a communication method. The method may be performed by a network device, or may be performed by a component (for example, a chip, a chip system, or a circuit) of the network device. This is not limited in this application. For ease of description, an example in which the method is performed by the network device is used for description below. The method includes: periodically sending a first synchronization signal and physical broadcast channel block SSB signal; receiving first indication information from a terminal device, where the first indication information indicates to periodically send a second SSB signal, and a transmission periodicity of the second SSB signal is less than a transmission periodicity of the first SSB signal; and periodically sending the second SSB signal based on the first indication information.

Based on the foregoing solution, the network device may send the first SSB signal when there is no data service, and send the second SSB signal when there is a data service requirement. Because the transmission periodicity of the second SSB signal is short, and the transmission periodicity of the first SSB signal is long, the network device can maintain low power consumption when no service is to be sent, thereby achieving effects of reducing power consumption and reducing a waste of resources. In addition, the terminal device triggers the first indication information to switch the first SSB signal to the second SSB signal, so that a switching latency of the second SSB signal can be reduced without configuration via a network.

With reference to the first aspect, in some implementations of the first aspect, the first indication information is a wake-up signal WUS, or the first indication information is a channel sounding reference signal SRS, or the first indication information is carried on an uplink physical channel.

With reference to the first aspect, in some implementations of the first aspect, the method further includes: sending configuration information of the second SSB signal to the terminal device.

With reference to the first aspect, in some implementations of the first aspect, the sending the configuration information of the second SSB signal to the terminal device includes: sending multiple pieces of first configuration information to the terminal device; and sending second indication information to the terminal device, where the second indication information indicates that one of the multiple pieces of first configuration information is the configuration information of the second SSB signal.

Based on the foregoing solution, one of the multiple pieces of first configuration information is indicated to the terminal device by using the second indication information, so that the configuration information of the second SSB signal can be flexibly adjusted based on a service transmission situation, thereby improving performance of a communication system.

With reference to the first aspect, in some implementations of the first aspect, the second indication information is carried in a medium access control control element MAC CE or carried in downlink control information DCI.

With reference to the first aspect, in some implementations of the first aspect, each of the multiple pieces of first configuration information includes a transmission periodicity of an SSB signal and identification information corresponding to each piece of first configuration information, and the second indication information is identification information corresponding to one of the multiple pieces of first configuration information.

With reference to the first aspect, in some implementations of the first aspect, each piece of first configuration information further includes SSB-based measurement timing configuration SMTC information.

With reference to the first aspect, in some implementations of the first aspect, the multiple pieces of first configuration information are carried in a plurality of radio resource control RRC messages.

With reference to the first aspect, in some implementations of the first aspect, the method further includes: periodically sending a third SSB signal, where a transmission periodicity of the third SSB signal is greater than the transmission periodicity of the second SSB signal.

Based on the solution, after service transmission ends, the second SSB signal with a short periodicity may be switched to the third SSB signal with a long transmission periodicity, so that resources of the network device can be saved, and energy consumption can be reduced.

With reference to the first aspect, in some implementations of the first aspect, the method further includes: the transmission periodicity of the first SSB signal is one of 320 ms, 480 ms, and 640 ms.

With reference to the first aspect, in some implementations of the first aspect, the method further includes: the transmission periodicity of the second SSB signal is 5 ms.

According to a second aspect, an embodiment of this application provides a communication method. The method may be performed by a network device, or may be performed by a component (for example, a chip, a chip system, or a circuit) of the network device. This is not limited in this application. For ease of description, an example in which the method is performed by the network device is used for description below. The method includes: periodically sending a first synchronization signal and physical broadcast channel block SSB signal; sending first indication information to a terminal device, where the first indication information indicates the terminal device to periodically receive a second SSB signal, and a transmission periodicity of the second SSB signal is less than a transmission periodicity of the first SSB signal; and periodically sending the second SSB signal based on the first indication information.

Based on the foregoing solution, the network device may send the first SSB signal when there is no data service, and send the second SSB signal when there is a data service requirement. Because the transmission periodicity of the second SSB signal is short, and the transmission periodicity of the first SSB signal is long, the network device can maintain low power consumption when no service is to be sent, thereby achieving effects of reducing power consumption and reducing a waste of resources. In addition, the network device sends the first indication information, to cause the terminal device to receive the second SSB signal, thereby ensuring that the terminal device receives the second SSB signal.

With reference to the second aspect, in some implementations of the first aspect, the first indication information is carried in MAC CE signaling.

With reference to the second aspect, in some implementations of the second aspect, the method further includes: sending configuration information of the second SSB signal to the terminal device.

With reference to the second aspect, in some implementations of the second aspect, the sending the configuration information of the second SSB signal to the terminal device includes: sending multiple pieces of first configuration information to the terminal device; and sending second indication information to the terminal device, where the second indication information indicates that one of the multiple pieces of first configuration information is the configuration information of the second SSB signal.

With reference to the second aspect, in some implementations of the second aspect, the second indication information is carried in a medium access control control element MAC CE or carried in downlink control information DCI.

With reference to the second aspect, in some implementations of the second aspect, each of the multiple pieces of first configuration information includes a transmission periodicity of an SSB signal and identification information corresponding to each piece of first configuration information, and the second indication information is identification information corresponding to one of the multiple pieces of first configuration information.

With reference to the second aspect, in some implementations of the second aspect, each piece of first configuration information further includes SSB-based measurement timing configuration SMTC information.

With reference to the second aspect, in some implementations of the second aspect, the multiple pieces of first configuration information are carried in a plurality of radio resource control RRC messages.

With reference to the second aspect, in some implementations of the second aspect, the method further includes: periodically sending a third SSB signal, where a transmission periodicity of the third SSB signal is greater than the transmission periodicity of the second SSB signal.

With reference to the second aspect, in some implementations of the second aspect, the method further includes: the transmission periodicity of the first SSB signal is one of 320 ms, 480 ms, and 640 ms.

With reference to the second aspect, in some implementations of the second aspect, the method further includes: the transmission periodicity of the second SSB signal is 5 ms.

According to a third aspect, an embodiment of this application provides a communication method. The method may be performed by a terminal device, or may be performed by a component (for example, a chip, a chip system, or a circuit) of the terminal device. This is not limited in this application. For ease of description, an example in which the method is performed by the terminal device is used for description below. The method includes: periodically receiving a first synchronization signal and physical broadcast channel block SSB signal; sending first indication information to a network device, where the first indication information indicates to send a second SSB signal, and a transmission periodicity of the second SSB signal is less than a transmission periodicity of the first SSB signal; and periodically receiving the second SSB signal based on the first indication information.

With reference to the third aspect, in some implementations of the third aspect, the first indication information is a wake-up signal WUS, or the first indication information is a channel sounding reference signal SRS, or the first indication information is carried on an uplink physical channel.

With reference to the third aspect, in some implementations of the third aspect, the method further includes: receiving configuration information of the second SSB signal from the network device.

With reference to the third aspect, in some implementations of the third aspect, the receiving the configuration information of the second SSB signal from the network device includes: receiving multiple pieces of first configuration information from the network device; and receiving second indication information from the network device, where the second indication information indicates that one of the multiple pieces of first configuration information is the configuration information of the second SSB signal.

With reference to the third aspect, in some implementations of the third aspect, the second indication information is carried in a medium access control control element MAC CE or carried in downlink control information DCI.

With reference to the third aspect, in some implementations of the third aspect, each of the multiple pieces of first configuration information includes a transmission periodicity of an SSB signal and identification information corresponding to each piece of first configuration information, and the second indication information is identification information corresponding to one of the multiple pieces of first configuration information.

With reference to the third aspect, in some implementations of the third aspect, each piece of first configuration information further includes SSB-based measurement timing configuration SMTC information.

With reference to the third aspect, in some implementations of the third aspect, the multiple pieces of first configuration information are carried in a plurality of radio resource control RRC messages.

With reference to the third aspect, in some implementations of the third aspect, the method further includes: periodically receiving a third SSB signal, where a transmission periodicity of the third SSB signal is greater than the transmission periodicity of the second SSB signal.

With reference to the third aspect, in some implementations of the third aspect, the transmission periodicity of the first SSB signal is one of 320 ms, 480 ms, and 640 ms.

With reference to the third aspect, in some implementations of the third aspect, the transmission periodicity of the second SSB signal is 5 ms.

According to a fourth aspect, an embodiment of this application provides a communication method. The method may be performed by a terminal device, or may be performed by a component (for example, a chip, a chip system, or a circuit) of the terminal device. This is not limited in this application. For ease of description, an example in which the method is performed by the terminal device is used for description below. The method includes: periodically receiving a first synchronization signal and physical broadcast channel block SSB signal; receiving first indication information from a network device, where the first indication information indicates the terminal device to periodically receive a second SSB signal, and a transmission periodicity of the second SSB signal is less than a transmission periodicity of the first SSB signal; and periodically receiving the second SSB signal based on the first indication information.

With reference to the fourth aspect, in some implementations of the fourth aspect, the first indication information is carried in MAC CE signaling.

With reference to the fourth aspect, in some implementations of the fourth aspect, the method further includes: receiving configuration information of the second SSB signal from the network device.

With reference to the fourth aspect, in some implementations of the fourth aspect, the receiving the configuration information of the second SSB signal from the network device includes: receiving multiple pieces of first configuration information from the network device; and receiving second indication information from the network device, where the second indication information indicates that one of the multiple pieces of first configuration information is the configuration information of the second SSB signal.

With reference to the fourth aspect, in some implementations of the fourth aspect, the second indication information is carried in a medium access control control element MAC CE or carried in downlink control information DCI.

With reference to the fourth aspect, in some implementations of the fourth aspect, each of the multiple pieces of first configuration information includes a transmission periodicity of an SSB signal and identification information corresponding to each piece of first configuration information, and the second indication information is identification information corresponding to one of the multiple pieces of first configuration information.

With reference to the fourth aspect, in some implementations of the fourth aspect, each piece of first configuration information further includes SSB-based measurement timing configuration SMTC information.

With reference to the fourth aspect, in some implementations of the fourth aspect, the multiple pieces of first configuration information are carried in a plurality of radio resource control RRC messages.

With reference to the fourth aspect, in some implementations of the fourth aspect, the method further includes: periodically receiving a third SSB signal, where a transmission periodicity of the third SSB signal is greater than the transmission periodicity of the second SSB signal.

With reference to the fourth aspect, in some implementations of the fourth aspect, the transmission periodicity of the first SSB signal is one of 320 ms, 480 ms, and 640 ms.

With reference to the fourth aspect, in some implementations of the fourth aspect, the transmission periodicity of the second SSB signal is 5 ms.

According to a fifth aspect, an embodiment of this application provides a communication apparatus. The communication apparatus is configured to perform the first aspect and any one of the implementations thereof, or is configured to perform the second aspect and any one of the implementations thereof. Specifically, the communication apparatus includes a processor. The processor is configured to invoke and run a computer program, so that the communication apparatus performs the first aspect and any one of the implementations thereof, or is configured to perform the second aspect and any one of the implementations thereof. Optionally, the communication apparatus further includes a memory, where the memory is configured to store the computer program.

According to a sixth aspect, an embodiment of this application provides a communication apparatus. The communication apparatus is configured to perform the third aspect and any one of the implementations thereof, or is configured to perform the fourth aspect and any one of the implementations thereof. Specifically, the communication apparatus includes a processor. The processor is configured to invoke and run a computer program, so that the communication apparatus performs the second aspect and any one of the implementations thereof, or is configured to perform the fourth aspect and any one of the implementations thereof. Optionally, the communication apparatus further includes a memory, where the memory is configured to store the computer program.

According to a seventh aspect, an embodiment of this application provides a communication apparatus. The communication apparatus is configured to perform the method provided in the first aspect and any one of the implementations thereof, or is configured to perform the second aspect and any one of the implementations thereof. Specifically, the communication apparatus may include a unit and/or a module (such as a processing unit and/or a transceiver unit) configured to perform the method provided in the first aspect and any one of the implementations thereof, and include a unit and/or a module (such as a processing unit and/or a transceiver unit) configured to perform the method provided in the second aspect and any one of the implementations thereof.

In an implementation, the communication apparatus may be a network device. The transceiver unit may be a transceiver or an input/output interface. The processing unit may be at least one processor. Optionally, the transceiver may be a transceiver circuit. Optionally, the input/output interface may be an input/output circuit.

In another implementation, the communication apparatus may be a chip, a chip system, or a circuit in a device. In this case, the transceiver unit may be an input/output interface, an interface circuit, an output circuit, an input circuit, a pin, a related circuit, or the like on the chip, the chip system, or the circuit, and the processing unit may be at least one processor, processing circuit, logic circuit, or the like.

According to an eighth aspect, an embodiment of this application provides a communication apparatus. The communication apparatus is configured to perform the method provided in the third aspect and any one of the implementations thereof, or is configured to perform the fourth aspect and any one of the implementations thereof. Specifically, the communication apparatus may include a unit and/or a module (such as a processing unit and/or a transceiver unit) configured to perform the method provided in the third aspect and any one of the implementations thereof, or include a unit and/or a module (such as a processing unit and/or a transceiver unit) configured to perform the method provided in the fourth aspect and any one of the implementations thereof.

In an implementation, the communication apparatus may be a terminal device. The transceiver unit may be a transceiver or an input/output interface. The processing unit may be at least one processor. Optionally, the transceiver may be a transceiver circuit. Optionally, the input/output interface may be an input/output circuit.

In another implementation, the communication apparatus may be a chip, a chip system, or a circuit in a device. In this case, the transceiver unit may be an input/output interface, an interface circuit, an output circuit, an input circuit, a pin, a related circuit, or the like on the chip, the chip system, or the circuit, and the processing unit may be at least one processor, processing circuit, logic circuit, or the like.

According to a ninth aspect, an embodiment of this application provides a processor configured to perform the method provided in at least one of the first aspect to the fourth aspect.

For sending and obtaining/receiving operations, and the like related to the processor, unless otherwise specified, or provided that the operations do not contradict actual functions or internal logic of the operations in relevant description, the operations may be understood as operations such as outputting, receiving, and inputting performed by the processor, or may be understood as sending and receiving operations performed by a radio frequency circuit and an antenna. This application constitutes no limitation.

According to a tenth aspect, an embodiment of this application provides a computer program product including instructions. The computer program product, when run on a computer, causes the computer to perform at least one of the first aspect to the fourth aspect, and the method provided in any one of the implementations in each aspect.

According to an eleventh aspect, an embodiment of this application provides a communication system, including a first communication device in the fifth aspect and a second communication device in the sixth aspect.

According to a twelfth aspect, a chip is provided. The chip includes a processor and a communication interface, where the processor reads instructions via the communication interface, to perform at least one of the first aspect to the fourth aspect, and the method provided in any one of the implementations in each aspect.

Optionally, in an implementation, the chip further includes a memory. The memory stores a computer program or instructions. The processor is configured to execute the computer program or the instructions stored in the memory. When the computer program or the instructions are executed, the processor is configured to perform at least one of the first aspect to the fourth aspect, and the method provided in any one of the implementations in each aspect.

According to a thirteenth aspect, an embodiment of this application provides a computer-readable storage medium. The computer-readable storage medium stores a computer program, where the computer program, when run on a communication apparatus, causes the communication apparatus to perform at least one of the first aspect to the fourth aspect, and the method in any one of the implementations in each aspect.

For technical effects of the second aspect to the thirteenth aspect, refer to the technical effects of the first aspect. Details are not described herein again.

### BRIEF DESCRIPTION OF DRAWINGS

FIG. 1 is a diagram of a wireless communication system applicable to an embodiment of this application;
FIG. 2 is a diagram of carrier aggregation;
FIG. 3 is a schematic flowchart of configuring a secondary cell;
FIG. 4 is a diagram of switching between an activated state and a deactivated state of a secondary cell;
FIG. 5 is a diagram of a first communication method 500 according to an embodiment of this application;
FIG. 6 is a diagram of a second communication method 600 according to an embodiment of this application;
FIG. 7 is a diagram of a method 700 for obtaining configuration information of a second SSB signal according to an embodiment of this application;
FIG. 8 is a diagram of a third communication method 800 according to an embodiment of this application;
FIG. 9 is a diagram of a fourth communication method 900 according to an embodiment of this application;
FIG. 10 is a block diagram of a communication apparatus 1000 according to an embodiment of this application;
FIG. 11 is a block diagram of a communication apparatus 1100 according to an embodiment of this application;
FIG. 12 is a diagram of a structure of a communication apparatus 1200 according to an embodiment of this application; and
FIG. 13 is a diagram of a chip system 1300 according to an embodiment of this application.

### DESCRIPTION OF EMBODIMENTS

The technical solutions in this application are to be described below with reference to the accompanying drawings.

The technical solutions provided in this application may be applied to various communication systems, for example, a fifth generation (5th generation, 5G) or new radio (new radio, NR) system, a long term evolution (long term evolution, LTE) system, an LTE frequency division duplex (frequency division duplex, FDD) system, and an LTE time division duplex (time division duplex, TDD) system. The technical solutions provided in this application may be further applied to a future communication system, such as a sixth generation (6th generation, 6G) mobile communication system. The technical solutions provided in this application may be further applied to device-to-device (device-to-device, D2D) communication, vehicle-to-everything (vehicle-to-everything, V2X) communication, machine to machine (machine to machine, M2M) communication, machine type communication (machine type communication, MTC), and an internet of things (internet of things, IoT) communication system. The technical solutions provided in this application may be further applied to a low-frequency scenario, a high-frequency scenario, terahertz, optical communication, a licensed (licensed) frequency band, an unlicensed (unlicensed) frequency band, or the like.

The technical solutions provided in this application may be further applied to non-terrestrial network (non-terrestrial network, NTN) systems such as an inter-satellite communication system and a satellite communication system. In an example, the satellite communication system includes a satellite base station and a terminal device. The satellite base station provides a communication service for the terminal device. The satellite base station may also communicate with a base station. A satellite may serve as a base station, or may serve as a terminal device. The satellite may be an unmanned aerial vehicle, a hot air balloon, a low earth orbit satellite, a medium earth orbit satellite, a high earth orbit satellite, or the like. The satellite may be alternatively a non-terrestrial base station, a non-terrestrial device, or the like.

A device in a communication system may send a signal to another device or receive a signal from another device. The signal may include information, signaling, data, or the like. The device may be alternatively replaced with an entity, a network entity, a network element, a communication device, a communication module, a node, a communication node, or the like. In this disclosure, the device is used as an example for description. For example, the communication system may include at least one terminal device and at least one network device. The network device may send a downlink signal to the terminal device, and/or the terminal device may send an uplink signal to the network device.

A terminal device in embodiments of this application includes various devices having a wireless communication function, which may be configured to be connected to a person, an object, a machine, and the like. The terminal device may be widely used in various scenarios, for example, cellular communication, D2D, V2X, peer-to-peer (peer-to-peer, P2P), M2M, MTC, IoT, virtual reality (virtual reality, VR), augmented reality (augmented reality, AR), industrial control, autonomous driving, telemedicine, smart grid, smart furniture, smart office, smart wearable, smart transportation, smart city, an unmanned aerial vehicle, a robot, remote sensing, passive sensing, positioning, navigation and tracking, and autonomous delivery. The terminal device may be a terminal in any one of the foregoing scenarios, such as an MTC terminal or an IoT terminal. The terminal device may be a user equipment (user equipment, UE) in a third generation partnership project (3rd generation partnership project, 3GPP) standard, a terminal (terminal), a fixed device, a mobile station (mobile station) device or a mobile device, a subscriber unit (subscriber unit), a handheld device, a vehicle-mounted device, a wearable device, a cellular phone (cellular phone), a smartphone (smartphone), a session initiation protocol (session initiation protocol, SIP) phone, a wireless data card, a personal digital assistant (personal digital assistant, PDA), a computer, a tablet computer, a notebook computer, a wireless modem, a handheld device (handset), a laptop computer (laptop computer), a computer having a wireless transceiver function, an intelligent book, a vehicle, a satellite, a global positioning system (global positioning system, GPS) device, a target tracking device, a flight vehicle (for example, an unmanned aerial vehicle, a helicopter, a multi copter, a quad copter, or an airplane), a vessel, a remote control device, a smart home device, an industrial device, an apparatus built in the foregoing device (for example, a communication module, a modem, or a chip in the foregoing device), or another processing device connected to a wireless modem. For ease of description, a description is provided below by using an example in which the terminal device is a terminal or a UE.

It should be understood that in some scenarios, the UE may be further configured to serve as a base station. For example, the UE may serve as a scheduling entity that provides sidelink signals between UEs in a scenario such as V2X, D2D, or P2P.

In embodiments of this application, an apparatus configured to implement a function of a terminal device, that is, a terminal apparatus, may be a terminal device, or may be an apparatus that can support a terminal device in implementing the function, for example, a chip system or a chip. The apparatus may be installed in the terminal device. In embodiments of this application, the chip system may include a chip, or may include a chip and another discrete device.

In embodiments of this application, a network device may be a device for communicating with the terminal device. The network device may also be referred to as an access network device or a radio access network device. For example, the network device may be a base station. The network device in embodiments of this application may be a radio access network (radio access network, RAN) node (or device) that connects the terminal device to a wireless network. The base station may cover any of the following names in a broad sense, or may be replaced with the following names, for example, a NodeB (NodeB), an evolved NodeB (evolved NodeB, eNB), a next generation NodeB (next generation NodeB, gNB), a relay station, an access point, a transmitting and receiving point (transmitting and receiving point, TRP), a transmitting point, a primary station, a secondary station, a multi-standard radio (motor slide retainer, MSR) node, a home base station, a network controller, an access node, a radio node, an access point (access point, AP), a transmission node, a transceiver node, a baseband unit (baseband unit, BBU), a remote radio unit (remote radio unit, RRU), an active antenna unit (active antenna unit, AAU), a remote radio head (remote radio head, RRH), a central unit (central unit, CU), a distributed unit (distributed unit, DU), or a positioning node. The base station may be a macro base station, a micro base station, a relay node, a donor node, or the like, or a combination thereof. The base station may be alternatively a communication module, a modem, or a chip arranged in the foregoing device or apparatus. The base station may be alternatively a mobile switching center, a device that bears a base station function in D2D, V2X, and M2M communication, a network side device in a 6G network, a device that bears a base station function in a future communication system, or the like. The base station may support networks using a same access technology or different access technologies. Embodiments of this application constitute no limitation on a specific technology and a specific device form used by the network device.

The base station may be fixed or mobile. For example, a helicopter or an uncrewed aerial vehicle may be configured as a mobile base station, and one or more cells may move based on a position of the mobile base station. In another example, the helicopter or the uncrewed aerial vehicle may be configured as a device for communicating with another base station.

In some deployments, the network device mentioned in embodiments of this application may be a device including a CU or a DU, a device including a CU and a DU, or a device including a control plane CU node (a central unit-control plane (central unit-control plane, CU-CP)), a user plane CU node (a central unit-user plane (central unit-user plane, CU-UP)), and a DU node. For example, the network device may include a gNB-CU-CP, a gNB-CU-UP, and a gNB-DU. The CU herein completes functions of a radio resource control protocol and a packet data convergence protocol (packet data convergence protocol, PDCP) of the base station, and may further complete a function of a service data adaptation protocol (service data adaptation protocol, SDAP). The DU completes functions of a radio link control layer and a medium access control (medium access control, MAC) layer of the base station, and may further complete some or all functions of a physical layer. For detailed descriptions of the foregoing protocol layers, refer to relevant technical specifications of the third generation partnership project (3rd generation partnership project, 3GPP).

In some deployments, a plurality of RAN nodes cooperatively assist the terminal in implementing radio access, and different RAN nodes separately implement some functions of the base station. For example, the RAN node may be a CU, a DU, a CU-CP, a CU-UP, or a radio unit (radio unit, RU). The CU and the DU may be separately disposed, or may be included in a same network element, for example, in a BBU. The RU may be included in a radio frequency device or a radio frequency unit, for example, included in an RRU, an AAU, or an RRH.

In different systems, the CU (or the CU-CP and the CU-UP), the DU, or the RU may have different names, but a person skilled in the art may understand meanings of the names. For example, the radio access network may also be an open radio access network (open radio access network, O-RAN) architecture. In an ORAN system, the CU may also be referred to as an open CU (open CU, O-CU), the DU may also be referred to as an open DU (open DU, O-DU), the CU-CP may also be referred to as an open CU-CP (open CU-CP, O-CU-CP), the CU-UP may also be referred to as an open CU-UP (open CU-UP, O-CU-UP), and the RU may also be referred to as an open RU (open RU, O-RU). Any one of the CU (or the CU-CP and the CU-UP), the DU, and the RU in this application may be implemented by a software module, a hardware module, or a combination of a software module and a hardware module.

In embodiments of this application, an apparatus configured to implement a function of the network device may be the network device, or may be an apparatus that can support the network device in implementing the function, for example, a chip system or a chip. The apparatus may be installed in the network device. In embodiments of this application, the chip system may include a chip, or may include a chip and another discrete device. In embodiments of this application, an example in which the apparatus configured to implement the function of the network device is the network device is merely used for description, and constitutes no limitation on the solutions in embodiments of this application.

The network device and the terminal device may be deployed on land, including indoor or outdoor, handheld or vehicle-mounted; or may be deployed on a water surface; or may be deployed on an airplane, a balloon, and a satellite in the air. Embodiments of this application constitute no limitation on scenarios in which the network device and the terminal device are located. In addition, the terminal device and the network device may be hardware devices, or may be software functions run on dedicated hardware or software functions run on general-purpose hardware, for example, virtual functions instantiated on a platform (for example, a cloud platform), or an entity including a dedicated or general-purpose hardware device and a software function. This application constitutes no limitation on specific forms of the terminal device and the network device.

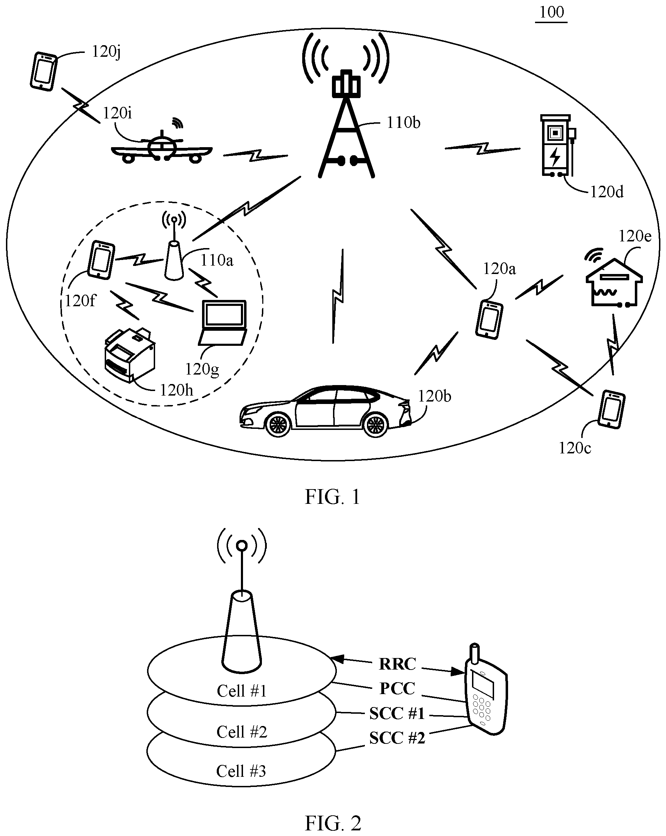

FIG. 1 is a diagram of a wireless communication system applicable to an embodiment of this application. As shown in FIG. 1, the wireless communication system includes a radio access network 100. The radio access network 100 may be a next-generation (for example, 6G or higher-version) radio access network, or a conventional (for example, 5G, 4G, 3G, or 2G) radio access network. One or more terminal devices (120a to 120j, which are collectively referred to as 12) may be connected to each other or connected to one or more network devices (110a and 110b, which are collectively referred to as 110) in the radio access network 100. Network elements in the wireless communication system are connected through an interface (for example, NG or Xn) or an air interface.

It may be understood that FIG. 1 is merely a diagram. The wireless communication system may further include another device, for example, may further include a core network device, a wireless relay device, and/or a wireless backhaul device, which are/is not shown in FIG. 1.

In this application, a base station sends a downlink signal or downlink information to a terminal, where the downlink information is carried on a downlink channel; and the terminal sends an uplink signal or uplink information to the base station, where the uplink information is carried on an uplink channel. To communicate with the base station, the terminal needs to establish a wireless connection with a cell controlled by the base station. The cell that has established the wireless connection with the terminal is referred to as a serving cell of the terminal. When communicating with the serving cell, the terminal is further subject to interference from signals from a neighboring cell.

In this specification, a physical uplink control channel (physical uplink control channel, PUCCH) and a physical uplink shared channel (physical uplink shared channel, PUSCH) are just respectively used as examples of an uplink control channel and an uplink data channel. In different systems and different scenarios, a data channel and a control channel may have different names. Embodiments of this application constitute no limitation.

To facilitate better understanding of the technical solutions of this application, some related technologies involved in the technical solutions of this application are described.
1. A cell is a set of resources managed by a base station, including a frequency domain resource and a space domain resource. The frequency domain resource of the cell includes an uplink frequency domain resource and/or a downlink frequency domain resource. The space domain resource of the cell may be a space domain resource corresponding to one beam or a group of beams, which may be alternatively understood as that one cell corresponds to one specific physical coverage area. In embodiments of this application, different cells may be managed by different base stations. For example, a cell #1 and a cell #2 may be managed by different base stations. Such a case may be referred to as a case in which the cell #1 and the cell #2 are not co-sited. The cell #1 and the cell #2 may be alternatively managed by a same base station, and have a same baseband processing unit and/or a same radio frequency processing unit. This is not limited in this application.
   It should be noted that cells and carriers are in one-to-one correspondence, and the cells and the carriers may be used interchangeably. In other words, a frequency band range of a cell may be understood as a frequency band range to which a frequency of a carrier corresponding to the cell belongs, or may be referred to as an operating frequency band of the cell, a frequency band in which the cell is located, or the like.
2. Carrier aggregation (carrier aggregation, CA) is a technology of combining two or more component carriers (component carriers, CCs) to support a larger transmission bandwidth. The CA technology in NR is used for increasing a transmission bandwidth of a single user. Specifically, the carrier aggregation technology may implement multi-frequency resource integration. For example, spectrum resources of a same frequency band or different frequency bands may be combined by using the CA technology and provided for a terminal to use, thereby improving resource utilization of an entire network and improving user experience.

For ease of understanding, the CA technology is briefly described with reference to FIG. 2. It can be learned from FIG. 2 that a component carrier corresponding to a cell #1, a component carrier corresponding to a cell #2, and a component carrier corresponding to a cell #3 are combined together to provide services for a terminal, where the cell #1 is a PCell, and the cell #2 and the cell #3 are SCells. The PCell is a cell in which the terminal establishes an initial connection or a cell in which the terminal reestablishes an RRC connection. The PCell is responsible for RRC communication with the terminal. The component carrier corresponding to the PCell is referred to as a primary component carrier (primary component carrier, PCC) (for example, a PCC shown in FIG. 2). A downlink carrier of the PCell is referred to as a DL PCC, and an uplink carrier of the PCell is referred to as a UL PCC. The SCells are added during RRC reconfiguration, and are configured to provide additional radio resources. No RRC communication exists between the SCell and the UE. The component carriers corresponding to the SCells are referred to as secondary component carriers (secondary component carriers, SCCs) (for example, an SCC #1 and an SCC #2 shown in FIG. 2). Downlink carriers of the SCells are referred to as DL SCCs, and uplink carriers of the SCells are referred to as UL SCCs.

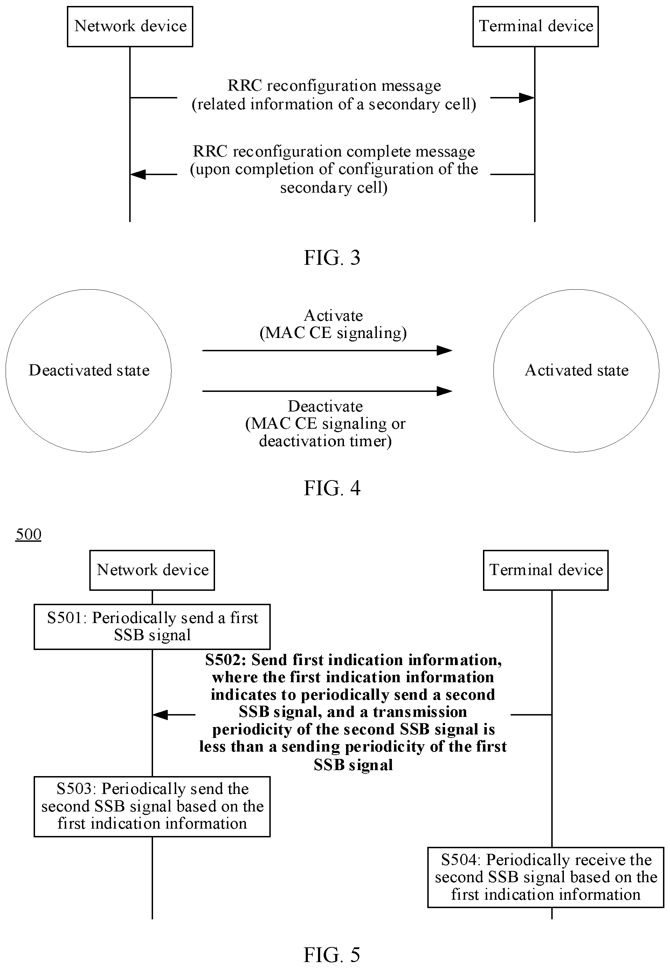

FIG. 3 is a schematic flowchart of configuring a secondary cell. Specifically, when configuring and adding a secondary cell, a network device establishes, through manual configuration, a CA frequency set and frequencies included in the CA frequency set. Cells corresponding to these frequencies are candidate secondary cells. After a terminal device establishes an RRC connection to a primary cell, the primary cell determines, based on the candidate secondary cells and a capability of the terminal device, secondary cells that the terminal device needs to add, and sends, by using an RRC reconfiguration message, related information of these secondary cells to the terminal device, and the terminal device adds the secondary cells based on the related information of the secondary cells. Details are shown in FIG. 3. During specific addition by the terminal device, two manners of configuring the secondary cells are provided: blind configuration and measurement-based configuration. When the blind configuration is used, the terminal device configures a secondary cell directly based on related information of the secondary cell delivered by the network device. When the measurement-based configuration is used, signal quality of a cell further needs to be considered. The cell can be configured as a secondary cell only when the signal quality of the cell meets a specific condition.

In NR R15, two states are defined for the secondary cell: an activated state and a deactivated state. When the secondary cell is in the activated state, and a physical downlink control channel (physical downlink control channel, PDCCH) is configured for the cell, the terminal device needs to monitor the PDCCH of the cell, and perform signal transmission based on network configuration and uplink and downlink scheduling information. When the secondary cell is in the deactivated state, the UE does not need to monitor or transmit any uplink or downlink signal in the secondary cell. The activated state and the deactivated state of the secondary cell may be switched by using medium access control control element (medium access control control element, MAC CE) signaling, as shown in FIG. 4.

Before the solutions of this application are described, the following descriptions are provided.
(1) In this application, an "indication" may include a direct indication, an indirect indication, an explicit indication, and an implicit indication. When a piece of indication information is described as indicating A, it may be understood as that the indication information carries A, directly indicates A, or indirectly indicates A.
   In this application, information indicated by the indication information is referred to as to-be-indicated information. In a specific implementation process, there are many manners of indicating the to-be-indicated information, for example, but not limited to directly indicating the to-be-indicated information, for example, the to-be-indicated information itself or an index of the to-be-indicated information. Alternatively, the to-be-indicated information may be indirectly indicated by indicating other information, where there is an association relationship between the other information and the to-be-indicated information. Alternatively, only a part of the to-be-indicated information may be indicated, and the other part of the to-be-indicated information is known or agreed upon in advance. For example, specific information may be alternatively indicated based on an arrangement sequence of the information that is agreed upon in advance (for example, stipulated in a protocol), to reduce indication overheads to some extent. In addition, the to-be-indicated information may be sent together as a whole, or may be divided into multiple pieces of sub-information and sent separately. In addition, sending periodicities and/or sending occasions of these pieces of sub-information may be the same or different.
(2) In this application, "sending" and "receiving" indicate directions of signal transmission. For example, "sending information to XX" may be understood as that a destination of the information is XX, and may include direct sending through an air interface, or include indirect sending by another unit or module through an air interface. "Receiving information from YY" may be understood as that a source of the information is YY, and may include direct receiving from YY through an air interface, or may include indirect receiving from YY via another unit or module through an air interface. The "sending" may also be understood as "outputting" of a chip interface, and the "receiving" may also be understood as "inputting" of the chip interface. In other words, sending and receiving may be performed between devices, for example, performed between a network device and a terminal device, or may be performed within a device. For example, sending or receiving is performed between components, modules, chips, software modules, or hardware modules within a device through a bus, a trace, or an interface.
(3) In embodiments of this application, unless otherwise stated or if there is a logic conflict, terms and/or descriptions in different embodiments are consistent and may be mutually referenced, and technical features in different embodiments may be combined into a new embodiment based on an internal logical relationship thereof.
(4) In this application, "first" and "second" are merely for ease of description, and are used to distinguish between objects, but are not intended to limit the scope of embodiments of this application. The terms are not intended to describe an order or a sequence of features. It should be understood that objects described in such a way are interchangeable in an appropriate circumstance, so that a solution other than embodiments of this application can be described.

The method provided in embodiments of this application is described in detail below with reference to the accompanying drawings. Embodiments provided in this application may be applied to the communication system shown in FIG. 1. This is not limited.

In the following embodiments, the terminal device and the network device are used as an example for description. The terminal device may be replaced with a component (for example, a chip or a circuit) of the terminal device, and the network device may be replaced with a component (for example, a chip or a circuit) of the network device.

FIG. 5 is a diagram of a first communication method 500 according to an embodiment of this application. FIG. 5 shows a process of information interaction between a network device and a terminal device. The method 500 shown in FIG. 5 may include the following plurality of steps.

S501: The network device periodically sends a first SSB signal.

S502: The terminal device sends first indication information to the network device, where the first indication information indicates to periodically send a second SSB signal, and a transmission periodicity of the second SSB signal is less than a transmission periodicity of the first SSB signal.

It should be noted that, the first indication information is not limited in this application, and may be a signal. The signal may be a signal carried on an uplink physical channel, for example, an uplink wake-up signal (wake-up signal, WUS), or may be a signal not carried on the uplink physical channel, for example, a sounding reference signal (sounding reference signal, SRS). In addition, the first indication information may be alternatively information carried on an uplink physical channel, for example, carried in an indication field of uplink control information (uplink control information, UCI) on a PUCCH or a PUSCH. In this case, UCI sent by the terminal device to the network device includes an indication field that carries the first indication information, where there may be one or more bits included in the indication field. For example, if a quantity of bits occupied by the indication field is 2, 00 indicates that the indication field does not carry the first indication information, or the first indication information does not indicate the network device to send the second SSB signal, and 11 indicates that the first indication information carried in the indication field indicates the network device to send the second SSB signal.

It should be noted that the transmission periodicity of the first SSB signal and the transmission periodicity of the second SSB signal are not limited in the solutions of this application, provided that the transmission periodicity of the first SSB signal is greater than the transmission periodicity of the second SSB signal. Optionally, a range of the transmission periodicity of the first SSB signal is [80 ms, 640 ms]. In this case, the transmission periodicity of the first SSB signal may be 80 ms, 160 ms, 320 ms, 480 ms, 640 ms, or the like. Optionally, the transmission periodicity of the second SSB signal is less than 20 ms, for example, may be 5 ms or 10 ms. Optionally, the transmission periodicity of the second SSB signal is less than 5 ms, for example, may be 3 ms.

S503: The network device periodically sends the second SSB signal based on the first indication information.

It should be noted that the network device sends only one SSB signal within one time period. In other words, if the network device sends the first SSB signal within a first time period, the network device learns, based on the first indication information after receiving the first indication information, that the sent SSB signal needs to be changed from the first SSB signal to the second SSB signal. In this case, the network device stops periodic sending of the first SSB signal, and sends the second SSB signal within a subsequent second time period.

S504: The terminal device periodically receives the second SSB signal based on the first indication information.

Specifically, after the terminal device sends the first indication information to the network device, the terminal device starts to receive the second SSB signal.

It may be understood that in this solution, the transmission periodicity of the first SSB signal is different from the transmission periodicity of the second SSB signal. For example, if the transmission periodicity of the first SSB signal is a first periodicity, the transmission periodicity of the second SSB signal is a second periodicity, and the second periodicity is less than the first periodicity. The first SSB signal may be sent when the terminal device has no requirement for measuring an SSB signal, for example, in a scenario in which the network device and the terminal device have no data service transmission, or a secondary cell of the terminal device is in a deactivated state. In this case, the network device sends the first SSB signal with a long periodicity, so that the network device can maintain low power consumption, to reduce energy consumption. When the terminal device needs to perform measurement by using an SSB signal, in other words, the terminal device has a requirement for measuring the SSB signal, for example, the network device and the terminal device have data transmission requirements, and the secondary cell in the deactivated state needs to be activated, or in a scenario in which the terminal device needs to remeasure the secondary cell due to factors such as movement, rotation, and an environment change, the network device sends the second SSB signal with a short periodicity, so that a measurement latency of the SSB signal can be reduced, thereby achieving objectives of quickly activating the secondary cell and quickly accessing the secondary cell, and achieving an effect of improving system performance.

In addition, in this solution, the terminal device sends the first indication information to indicate the network device to switch the periodicity of the sent SSB signal, so that the terminal device can flexibly indicate the network device based on an uplink service requirement or an environment of the terminal device, thereby improving system reliability and efficiency of switching the periodicity of the SSB signal.

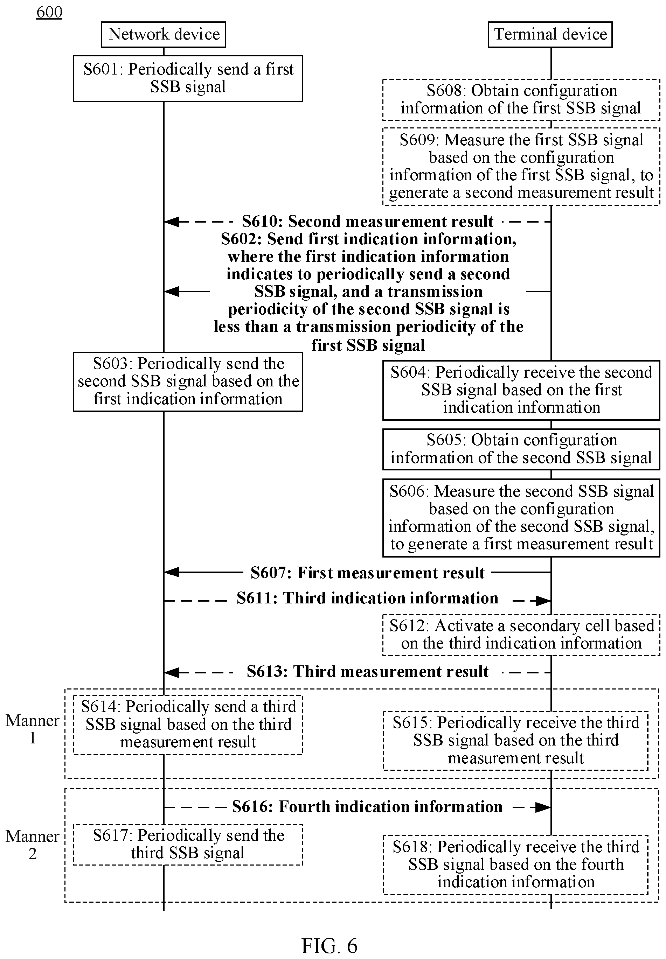

FIG. 6 is a diagram of a second communication method 600 according to an embodiment of this application. FIG. 6 shows a process of information interaction between a network device and a terminal device. Compared with the method 500, the method 600 shown in FIG. 6 further includes another process in which the terminal device interacts with the network device after receiving a second SSB signal. Specifically, the method shown in FIG. 6 includes the following plurality of steps.

S601: The network device periodically sends a first SSB signal.

S602: The terminal device sends first indication information to the network device, where the first indication information indicates to periodically send the second SSB signal, and a transmission periodicity of the second SSB signal is less than a transmission periodicity of the first SSB signal.

S603: The network device periodically sends the second SSB signal based on the first indication information.

S604: The terminal device periodically receives the second SSB signal based on the first indication information.

Specifically, for related descriptions of S601 to S604, respectively refer to the descriptions of S501 to S504 in the method 500 shown in FIG. 5. Details are not described herein again.

S605: The terminal device obtains configuration information of the second SSB signal.

In some embodiments, the configuration information of the second SSB signal obtained by the terminal device is preset in both the terminal device and the network device. The "preset" may include predefined, for example, defined in a protocol. The "predefined" may be implemented by pre-storing, in the network device and the terminal device, corresponding code, a corresponding table, or other related information that can be used for indication. A specific implementation of predefinition is not limited in this application. In this case, the configuration information of the second SSB signal may include the transmission periodicity of the second SSB signal and SSB-based measurement timing configuration (SSB-based measurement timing configuration, SMTC) information. The SMTC information may include an SMTC periodicity and SMTC duration. The SMTC periodicity is a measurement periodicity of the second SSB signal, and the SMTC duration is measurement duration of the second SSB signal. It should be noted that to ensure that the second SSB signal is accurately and completely measured, the SMTC periodicity is at least equal to the transmission periodicity of the second SSB signal, to be specific, the SMTC periodicity may be the same as the transmission periodicity of the second SSB signal, or may be greater than the transmission periodicity of the second SSB signal.

It may be understood that the transmission periodicity of the second SSB signal and the SMTC information in the predetermined second SSB signal obtained by the terminal device are generally fixed values. To be specific, once the configuration information of the second SSB signal is configured in the terminal device, such configuration seldom changes. For example, during factory configuration, default configuration information is set for configuration of the second SSB signal. Therefore, when the configuration information of the second SSB signal obtained by the terminal device is preset information, the terminal device does not need to interact with other devices, decode information, or the like, so that accuracy of the configuration information of the second SSB signal can be ensured, thereby improving system stability.

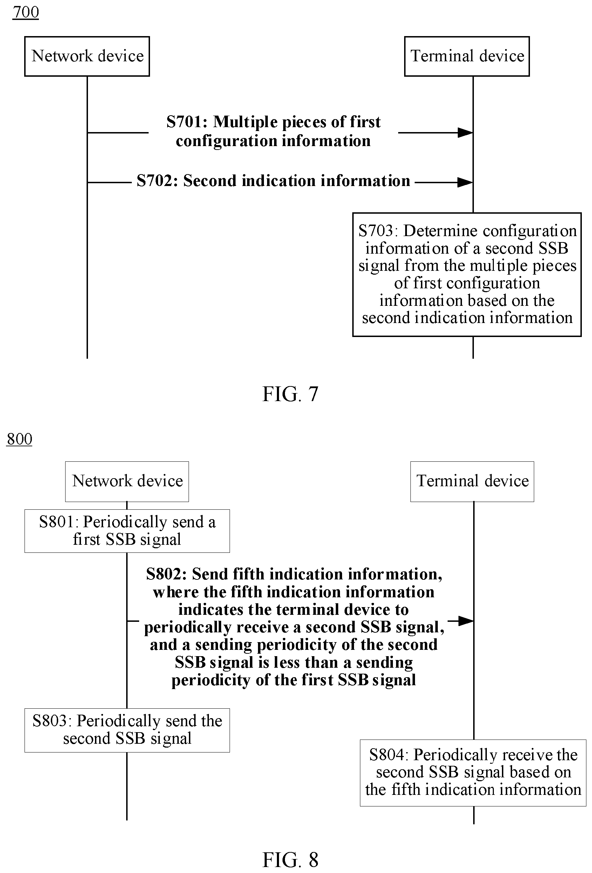

In some other embodiments, the second SSB signal obtained by the terminal device is sent by the network device to the terminal device. In a possible implementation, the network device sends the configuration information of the second SSB signal to the terminal device. For example, the network device includes the configuration information of the second SSB signal in RRC reconfiguration signaling, and sends the RRC reconfiguration signaling to the terminal device, so that after receiving the RRC reconfiguration signaling, the terminal device obtains the configuration information of the second SSB signal from the RRC reconfiguration signaling, and measures the second SSB signal. In another possible implementation, as shown in FIG. 7, the network device provides the configuration information of the second SSB signal for the terminal device by indicating one of multiple pieces of sent first configuration information. Specifically, FIG. 7 includes the following plurality of steps.

S701: The network device sends the multiple pieces of first configuration information to the terminal device.

It should be noted that the multiple pieces of first configuration information may be carried in a same message, or the multiple pieces of first configuration information are separately carried in multiple messages. This is not limited in this application. Optionally, the multiple pieces of first configuration information are carried in RRC reconfiguration signaling, and are sent to the terminal device, or the multiple pieces of first configuration information are carried in another configuration message. This is not limited in this application.

Specifically, each piece of first configuration information may include the transmission periodicity of the second SSB signal, SMTC information, and identification information corresponding to each piece of first configuration information. Sending periodicities of the second SSB signal and SMTC information included in all the pieces of first configuration information are not exactly the same. To be specific, when the sending periodicities of the second SSB signal included in all the pieces of first configuration information are the same, the SMTC information included in all the pieces of first configuration information is different; or when the sending periodicities of the second SSB signal included in all the pieces of first configuration information are different, the SMTC information included in all the pieces of first configuration information may be the same or may be different. In other words, for any two pieces of first configuration information, at least one of sending periodicities of the second SSB signals and SMTC information differs. For the SMTC information, refer to the foregoing descriptions. Details are not described herein again. The identification information corresponding to the first configuration information may be an index, a number, or the like corresponding to the first configuration information. For example, when the network device delivers four pieces of first configuration information to the terminal device: first configuration information #1, first configuration information #2, first configuration information #3, and first configuration information #4, the first configuration information #1 includes a transmission periodicity #1 of the second SSB signal, SMTC information #1, and identification information 1 of the first configuration information #1, the first configuration information #2 includes a transmission periodicity #2 of the second SSB signal, SMTC information #2, and identification information 2 of the first configuration information #2, the first configuration information #3 includes a transmission periodicity #3 of the second SSB signal, SMTC information #3, and identification information 3 of the first configuration information #3, and the first configuration information #4 includes a transmission periodicity #4 of the second SSB signal, SMTC information #4, and identification information 4 of the first configuration information #4. When the transmission periodicity #1 to the transmission periodicity #4 are the same, the SMTC information #1 to the SMTC information #4 are different. When any two of the transmission periodicity #1 to the transmission periodicity #4 are different, the SMTC information #1 to the SMTC information #4 may be completely the same, or completely different, or partially the same.

S702: The network device sends second indication information to the terminal device, where the second indication information indicates that one of the multiple pieces of first configuration information is the configuration information of the second SSB signal.

Specifically, the second indication information is the identification information corresponding to the first configuration information. Optionally, the second indication information is carried in a MAC CE, downlink control information (downlink control information, DCI), or the like. It may be understood that when the second indication information is carried in the MAC CE or the DCI, the MAC CE or the DCI sent by the network device to the terminal device includes an indication field of the second indication information. There may be one or more bits included in the indication field, and a value corresponding to the one or more bits is an identifier of the first configuration information.

S703: The terminal device determines the configuration information of the second SSB signal from the multiple pieces of first configuration information based on the second indication information.

Specifically, after receiving the second indication information, the terminal device determines, based on a value of the second indication information, an identifier corresponding to a piece of first configuration information, to determine, from the multiple pieces of first configuration information, the first configuration information corresponding to the identifier as the configuration information of the second SSB signal.

It may be understood that when the configuration information of the second SSB signal is provided by the network device, the transmission periodicity of the second SSB signal may be flexibly designed. For example, the network device determines the transmission periodicity of the second SSB signal based on a congestion situation of a current downlink transmission resource, thereby improving flexibility of configuring the second SSB signal, so that a system can adapt to different scenarios.

S606: The terminal device measures the second SSB signal based on the configuration information of the second SSB signal, to generate a first measurement result.

Specifically, after obtaining the configuration information of the second SSB signal, the terminal device measures the second SSB signal by using the configuration information of the second SSB signal, to generate the first measurement result. The first measurement result may be a measurement result of a layer 3 (L3) or a layer 1 (L1), or may be reference signal received power (reference signal received power, RSRP) information. This is not limited in this application. For a measurement process of L3/L1, refer to descriptions in a related protocol. Details are not described herein. For example, when the second SSB signal is used for secondary cell configuration, the network device may select, based on the first measurement result, a secondary cell to be configured for the terminal device. When the second SSB signal is used for activating the secondary cell, the first measurement result may be RSRP information of the secondary cell that is generated in a process of activating the secondary cell.

S607: The terminal device sends the first measurement result to the network device.

Specifically, after obtaining the first measurement result of the second SSB signal, the terminal device reports the first measurement result to the network device. Optionally, the first measurement result sent by the terminal device to the network device may be periodically or aperiodically reported to the network device. This is not limited in this application.

In some scenarios, if the terminal device measures the first SSB signal within a sending time period of the first SSB signal, the method may further include the following plurality of steps.

S608: The terminal device obtains configuration information of the first SSB signal.

In some embodiments, the configuration information of the first SSB signal obtained by the terminal device is preset in the terminal device and the network device, for example, defined in a protocol. This is not limited in this application. In some other embodiments, the first SSB signal obtained by the terminal device is sent by the network device to the terminal device, for example, sent to the terminal device by using the RRC reconfiguration signaling. The configuration information of the first SSB signal includes the transmission periodicity of the first SSB signal and SMTC information corresponding to the first SSB signal. For the SMTC information, refer to the foregoing descriptions. Details are not described herein again. It may be understood that an SMTC periodicity in the SMTC information corresponding to the first SSB signal is greater than or equal to the transmission periodicity of the first SSB signal.

It should be noted that when the terminal device still measures the first SSB signal, the terminal device obtains the SMTC information corresponding to the first SSB signal. Therefore, when the terminal device obtains the configuration information of the second SSB signal in S605, the SMTC information corresponding to the first SSB signal may be still used as the SMTC information corresponding to the second SSB signal. In other words, the configuration information of the second SSB signal obtained by the terminal device may not include the SMTC information, thereby reducing a latency for the terminal device to obtain the configuration information of the second SSB signal, and saving resources carrying the configuration information of the second SSB signal.

S609: The terminal device measures the first SSB signal based on the configuration information of the first SSB signal, to generate a second measurement result.

S610: The terminal device sends the second measurement result to the network device.

Specifically, for S609 and S610, respectively refer to S606 and S607. Details are not described herein again.

In some scenarios, if the second SSB signal is used for secondary cell configuration, the network device may select, based on the first measurement result, a secondary cell that needs to be configured for the terminal device. For details, refer to the related descriptions in FIG. 3. Details are not described herein again. After the terminal device completes adding and configuring the secondary cell, the secondary cell is in a deactivated state by default. If the network device activates at least one configured secondary cell, the method 600 may further include the following plurality of steps.

S611: The network device sends third indication information to the terminal device, where the third indication information indicates to activate the secondary cell.

Specifically, the third indication information includes identification information of a secondary cell that needs to be activated, for example, an ID of the secondary cell or an index (index) of the secondary cell. In addition, a message that carries the third indication information is not limited in this application. Optionally, the third indication information is carried in MAC CE signaling. For example, when the third indication information is carried in the MAC CE signaling, the MAC CE signaling includes an indication field that carries the third indication information. The indication field is one or more bits, and a value of the one or more bits is the identification information of the secondary cell.

S612: The terminal device activates the secondary cell based on the third indication information, to generate a third measurement result.

Specifically, after the terminal device receives the third indication information, the terminal device performs time-frequency synchronization with the network device, and measures a channel state information-reference signal (channel state information-reference signal, CSI-RS) of each secondary cell, to obtain channel state information (channel state information, CSI) of each secondary cell, that is, the third measurement result, so that the network device can perform corresponding data scheduling based on the third measurement result. Generally speaking, the CSI mainly includes three pieces of information: channel quality indicator (channel quality indicator, CQI) information, rank indicator (rank indicator, RI) information, and precoding matrix indicator (precoding matrix indicator, PMI) information. This is not limited in this application.

S613: The terminal device reports the third measurement result to the network device.

Specifically, after the terminal device activates the secondary cell, the terminal device reports the CSI of the secondary cell to the network device. Correspondingly, the network device receives the CSI.

It may be understood that after the network device receives a valid CSI measurement report that is reported by the terminal device, it indicates that an activation process of the secondary cell has been completed. Upon completion of activation of the secondary cell, the network device and the terminal device may perform data transmission in the secondary cell. In this case, the secondary cell is in an activated state. For a cell in the activated state, the network device may stop sending the second SSB signal in the secondary cell, and re-send a third SSB signal with a third periodicity within a third time period. The periodicity of the third SSB signal may be a conventional periodicity, and a transmission periodicity of the third SSB signal is greater than the transmission periodicity of the second SSB signal. For example, the periodicity of the third SSB signal is 20 ms. Then, the terminal device may periodically detect the third SSB signal. In a possible implementation, after receiving the third measurement result, the network device may immediately stop sending the second SSB signal, and start to periodically send the third SSB signal. In another possible implementation, the network device may continue sending the second SSB signal for a period of time, and send the third SSB signal after sending fourth indication information to the terminal device. Steps that may be included in the method 600 are described below according to the foregoing different implementations.

When the third measurement result triggers the network device to periodically send the third SSB signal, the method 600 includes S614 and S615.

S614: The network device periodically sends the third SSB signal based on the third measurement result, where the transmission periodicity of the third SSB signal is greater than the transmission periodicity of the second SSB signal.

Specifically, after the terminal device reports the third measurement result to the network device, the network device stops, based on the third measurement result, sending the second SSB signal, and starts to periodically send the third SSB signal.

S615: The terminal device periodically receives the third SSB signal.

Specifically, after the terminal device reports the third measurement result to the network device, the terminal device periodically receives the third SSB signal in the secondary cell.

When the fourth indication information triggers the network device to periodically send the third SSB signal, the method 600 includes S616 to S618.

S616: The network device sends the fourth indication information to the terminal device, where the fourth indication information indicates the network device to send the third SSB signal, and the transmission periodicity of the third SSB signal is greater than the transmission periodicity of the second SSB signal.

Specifically, after the network device receives the third measurement result, the network device may continue sending the second SSB signal for a period of time. When the network device and the terminal device perform transmission on a small amount of data, the network device sends the fourth indication information to the terminal device, to indicate the network device to send the third SSB signal.

Optionally, the fourth indication information is carried in a MAC CE or DCI.

S617: The network device periodically sends the third SSB signal.

It may be understood that the network device may send the third SSB signal after sending the fourth indication information; or first send the third SSB signal, and then send the fourth indication information to the terminal device; or send the fourth indication information to the terminal device while sending the third SSB signal. That is, a sequence of S616 and S617 is not limited in this application.

S618: The terminal device periodically receives the third SSB signal based on the fourth indication information.

Specifically, after the terminal device receives the fourth indication information from the network device, the terminal device periodically receives the third SSB signal in the secondary cell.

FIG. 8 is a diagram of a third communication method 800 according to an embodiment of this application. FIG. 8 shows a process of information interaction between a network device and a terminal device. It should be noted that in the method 500 shown in FIG. 5, triggering the network device to switch from periodic sending of the first SSB signal to periodic sending of the second SSB signal is implemented by using the first indication information sent by the terminal device. For example, the first indication information may be sent by the terminal device to the network device when the terminal device has a high transmission requirement for uplink data or has a requirement for activation, handover, or the like of the secondary cell. Compared with the method 500, in the method 800 shown in FIG. 8, triggering the network device to switch a first SSB signal to a second SSB signal is implemented by the network device. For example, when determining, based on uplink and downlink service requirements, that a secondary cell of the terminal device needs to be activated, the network device may perform the method 800 shown in FIG. 8. The method 800 shown in FIG. 8 may include the following plurality of steps.

S801: The network device periodically sends the first SSB signal.

S802: The network device sends fifth indication information to the terminal device, where the fifth indication information indicates the terminal device to periodically receive the second SSB signal, and a transmission periodicity of the second SSB signal is less than a transmission periodicity of the first SSB signal.

Optionally, the fifth indication information includes identification information of a secondary cell. For example, when the fifth indication information occupies a plurality of bits, values of the multiple bits are the identification information of the secondary cell. In this case, the terminal device may determine, based on the values of the bits, a specific secondary cell that needs to be activated, and receive the second SSB signal in the corresponding secondary cell. Optionally, the network device uses a bitmap (bitmap) to indicate a correspondence between an identifier of the secondary cell and an activation state, so that the terminal device can learn of, based on the bitmap, specific secondary cells in which the network device has sent the second SSB signal. When the correspondence between the identifier of the secondary cell and the activation state is indicated based on the bitmap, the multiple bits in the fifth indication information received by the terminal device successively correspond, from the least significant bit to the most significant bit, to identification information of the secondary cells in ascending order, so that after receiving the bitmap, the terminal device can determine, based on the bitmap, specific secondary cells that are activated. For example, when the network device configures five secondary cells for the terminal device, the fifth indication information corresponds to 5 bits, and the 5-bit fifth indication information successively corresponds, from the most significant bit to the least significant bit, to a secondary cell #5, a secondary cell #4, a secondary cell #3, a secondary cell #2, and a secondary cell #1. When the fifth indication information is 11001, the fifth indication information indicates that the secondary cell #5, the secondary cell #4, and the secondary cell #1 are cells that need to be activated. In other words, the terminal device separately receives the second SSB signal in the secondary cell #5, the secondary cell #4, and the secondary cell #1. It may be understood that the fifth indication information is described by using an example in which a bit of 1 represents a to-be-activated cell, or may be described by using an example in which a bit of 0 indicates to receive the second SSB signal in a secondary cell corresponding to the bit. This is not limited in this application.

It should be noted that the fifth indication information is not limited in this application. For example, the fifth indication information may be indication information carried in MAC CE signaling.

In addition, for a range of the transmission periodicity of the first SSB signal and a range of the transmission periodicity of the second SSB signal, refer to the descriptions in FIG. 5. Details are not described herein again.

S803: The network device periodically sends the second SSB signal.

It should be noted that in this solution, a sequence of S802 and S803 is not limited in this application. The network device may first send the second SSB signal and then send the fifth indication information, or the network device may send the fifth indication information while sending the second SSB signal, or may first send the fifth indication information and then send the second SSB signal.

S804: The terminal device periodically receives the second SSB signal based on the fifth indication information.

Specifically, after receiving the fifth indication information, the terminal device periodically receives the second SSB signal based on the fifth indication information.

It may be understood that the first SSB signal may be sent when the network device has no requirement for measuring an SSB signal, for example, in a scenario in which the network device and the terminal device have no data service transmission, or the secondary cell of the terminal device is in a deactivated state. In this case, the network device sends the first SSB signal with a long periodicity, so that the network device can maintain low power consumption, to reduce energy consumption. When the network device needs to perform measurement by using an SSB signal, in other words, the network device has a requirement for measuring the SSB signal, for example, the network device and the terminal device have data transmission requirements, and the secondary cell in the deactivated state needs to be activated, the network device sends the second SSB signal with a short periodicity, so that a measurement latency of the SSB signal can be reduced, thereby achieving an objective of quickly activating the secondary cell, and achieving an effect of improving system performance.

In addition, in this solution, the network device sends the fifth indication information to indicate the terminal device to receive the second SSB signal, so that the network device can flexibly indicate the terminal device based on a service requirement, thereby improving system reliability and efficiency of switching a periodicity of the SSB signal.

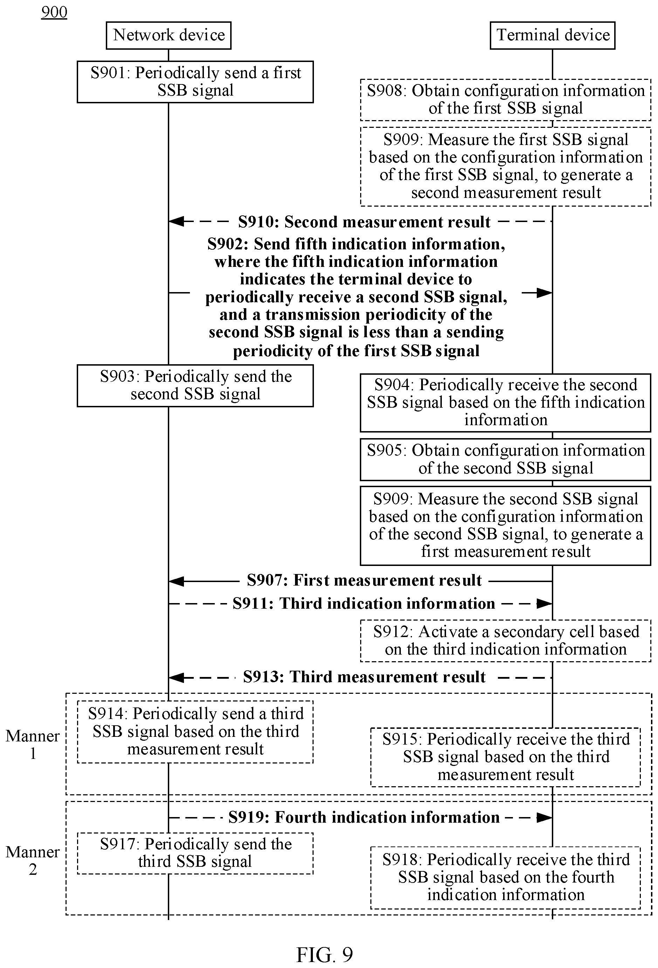

FIG. 9 is a diagram of a fourth communication method 900 according to an embodiment of this application. FIG. 9 shows a process of information interaction between a network device and a terminal device. Compared with the method 500, the method 900 shown in FIG. 9 further includes another process in which the terminal device interacts with the network device after receiving a second SSB signal. Specifically, the method shown in FIG. 9 includes the following plurality of steps.

S901: The network device periodically sends a first SSB signal.

S902: The network device sends fifth indication information to the terminal device, where the fifth indication information indicates the terminal device to periodically receive the second SSB signal, and a transmission periodicity of the second SSB signal is less than a transmission periodicity of the first SSB signal.

S903: The network device periodically sends the second SSB signal.

S904: The terminal device periodically receives the second SSB signal based on the fifth indication information.

Specifically, for related descriptions of S901 to S904, respectively refer to the descriptions of S801 to S804 in the method 800 shown in FIG. 8. Details are not described herein again.

S905: The terminal device obtains configuration information of the second SSB signal.

S906: The terminal device measures the second SSB signal based on the configuration information of the second SSB signal, to generate a first measurement result.

S907: The terminal device sends the first measurement result to the network device.

S908: The terminal device obtains configuration information of the first SSB signal.

S909: The terminal device measures the first SSB signal based on the configuration information of the first SSB signal, to generate a second measurement result.

S910: The terminal device sends the second measurement result to the network device.

S911: The network device sends third indication information to the terminal device, where the third indication information indicates to activate a secondary cell.

S912: The terminal device activates the secondary cell based on the third indication information, to generate a third measurement result.

S913: The terminal device reports the third measurement result to the network device.

S914: The network device periodically sends a third SSB signal based on the third measurement result, where a transmission periodicity of the third SSB signal is greater than the transmission periodicity of the second SSB signal.

S915: The terminal device periodically receives the third SSB signal.

S919: The network device sends fourth indication information to the terminal device, where the fourth indication information indicates the network device to start to send the third SSB signal, and the transmission periodicity of the third SSB signal is greater than the transmission periodicity of the second SSB signal.

S917: The network device periodically sends the third SSB signal based on the fourth indication information.

S918: The terminal device periodically receives the third SSB signal.

Specifically, for S905 to S918, respectively refer to the descriptions of S605 to S618 in FIG. 6. Details are not described herein again.

It should be understood that sequence numbers of the foregoing processes do not mean execution sequences. The execution sequences of the processes should be determined based on functions and internal logic of the processes, and should not constitute any limitation on the implementation processes of embodiments of this application.

It should be further understood that in embodiments of this application, unless otherwise stated or if there is a logic conflict, terms and/or descriptions in different embodiments are consistent and may be mutually referenced, and technical features in different embodiments may be combined to form a new embodiment based on an internal logical relationship thereof.

It should be further understood that in some of the foregoing embodiments, a device (for example, a network device or a terminal device) in an existing network architecture is mainly used as an example for example description. It should be understood that a specific form of the device is not limited in embodiments of this application. For example, devices that can implement a same function in the future are all applicable to embodiments of this application.

It may be understood that in the foregoing method embodiments, the methods and operations implemented by the device (for example, the network device or the terminal device) may be alternatively implemented by a component (for example, a chip or a circuit) of the device. This is not limited.

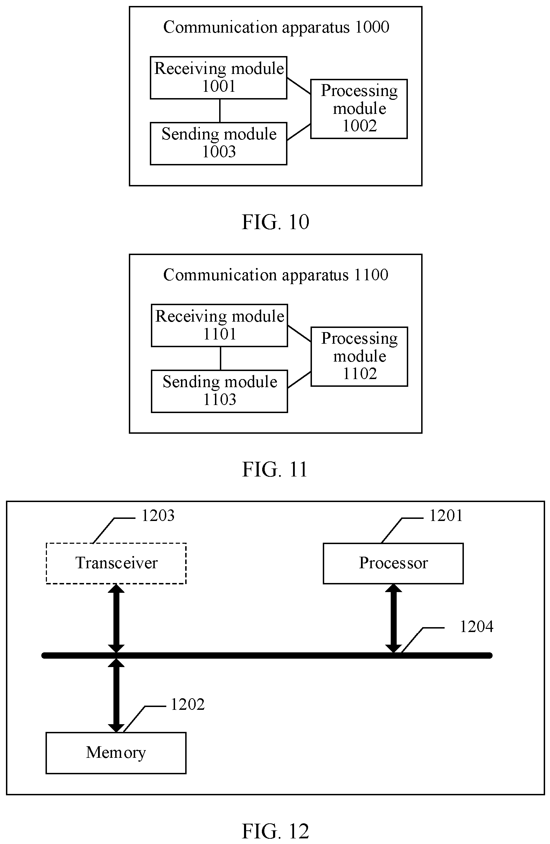

The methods provided in embodiments of this application are described in detail above with reference to FIG. 5 to FIG. 9. The apparatus and the chip system provided in embodiments of this application are described in detail below with reference to FIG. 10 to FIG. 13. It should be understood that descriptions of apparatus embodiments correspond to descriptions of the method embodiments. Therefore, for content that is not described in detail, refer to the method embodiments. For brevity, details are not described herein.

The communication methods in FIG. 5 to FIG. 9 are mainly described from a perspective of interaction between the terminal device and the network device. It may be understood that to implement the foregoing functions, the terminal device and the network device include corresponding hardware structures and/or software modules for performing the functions.

It may be understood that to implement the functions in the foregoing embodiments, the network device and the terminal device include corresponding hardware structures and/or software modules for performing the functions. A person skilled in the art should easily be aware that the units and method steps in the examples described with reference to embodiments disclosed in this application can be implemented in a form of hardware or a combination of hardware and computer software in this application. Whether a function is performed by hardware or computer software driving hardware depends on specific application scenarios and design constraints of the technical solutions.

FIG. 10 is a block diagram of a communication apparatus 1000 according to an embodiment of this application. For example, the communication apparatus is a base station 110a or 110b shown in FIG. 1, or may be a module (such as a chip) used in the base station. Specifically, the communication apparatus 1000 includes a receiving module 1001. The receiving module 1001 may be configured to implement a corresponding receiving function. The receiving module 1001 may also be referred to as a receiving unit. The communication apparatus 1000 further includes a processing module 1002. The processing module 1002 may be configured to implement a corresponding processing function. The communication apparatus 1000 further includes a sending module 1003. The sending module 1003 may be configured to implement a corresponding sending function. The sending module 1003 may also be referred to as a sending unit. The receiving module 1001 and the sending module 1003 may also be referred to as communication interfaces or communication units.

Optionally, the communication apparatus 1000 further includes a storage unit. The storage unit may be configured to store instructions and/or data. The processing module 1002 may read the instructions and/or the data in the storage unit, to enable the communication apparatus 1000 to implement actions of the network devices in the foregoing various method embodiments.

The communication apparatus 1000 may be configured to perform actions performed by the network devices in the foregoing method embodiment 500 to method embodiment 900. In this case, the communication apparatus 1000 may be a component of the network device. The receiving module 1001 is configured to perform receiving-related operations of the network device in the foregoing method embodiment. The processing module 1002 is configured to perform processing-related operations of the network devices in the foregoing method embodiment 500 to method embodiment 900. The sending module 1003 is configured to perform sending-related operations of the network devices in the foregoing method embodiment 500 to method embodiment 900.

In an embodiment, the communication apparatus 1000 may be configured to perform operations of the network devices in FIG. 5 to FIG. 9. For example:
the sending module 1003 is configured to periodically send a first SSB signal, and periodically send a second SSB signal based on first indication information.

The receiving module 1001 is configured to receive first indication information from a terminal device, where the first indication information indicates to periodically send the second SSB signal, and a transmission periodicity of the second SSB signal is less than a transmission periodicity of the first SSB signal.

The processing module 1002 is configured to stop periodically sending the first SSB signal, and start to send the second SSB signal.

It should be understood that a specific process in which the modules perform the foregoing corresponding steps has been described in detail in the foregoing method embodiments. For brevity, details are not described herein again.

In addition, the receiving module 1001, the processing module 1002, and the sending module 1003 in the communication apparatus 1000 may further implement other operations or functions of the network device in the foregoing methods. Details are not described herein again.

Optionally, the communication apparatus 1000 may be a device including a network device, or may be a component configured in the network device, for example, a chip of the network device. In this case, the receiving module 1001 and the sending module 1003 may be interface circuits, pins, or the like. Specifically, an interface circuit may include an input circuit and an output circuit. The receiving module 1001 may include an input circuit, the sending module 1003 may include an output circuit, and the processing module 1002 may include a processing circuit.

FIG. 11 is a block diagram of a communication apparatus 1100 according to an embodiment of this application. For example, the communication apparatus may be one of terminals 120a to 120j shown in FIG. 1, or may be a module (such as a chip) used in a terminal. Specifically, the communication apparatus 1100 includes a receiving module 1101. The receiving module 1101 may be configured to implement a corresponding receiving function. The receiving module 1101 may also be referred to as a receiving unit. The communication apparatus 1100 further includes a processing module 1102. The processing module 1102 may be configured to implement a corresponding processing function. The communication apparatus 1100 further includes a sending module 1103. The sending module 1103 may be configured to implement a corresponding sending function. The sending module 1103 may also be referred to as a sending unit. The receiving module 1101 and the sending module 1103 may also be referred to as communication interfaces or communication units.

Optionally, the communication apparatus 1100 further includes a storage unit. The storage unit may be configured to store instructions and/or data. The processing module 1102 may read the instructions and/or the data in the storage unit, to enable the communication apparatus 1100 to implement actions of the terminal devices in the foregoing various method embodiments.

The communication apparatus 1100 may be configured to perform actions performed by the terminal devices in the foregoing method embodiment 500 to method embodiment 900. In this case, the communication apparatus 1100 may be a component of the terminal device. The receiving module 1101 is configured to perform receiving-related operations of the terminal device in the foregoing method embodiment. The processing module 1102 is configured to perform processing-related operations of the terminal devices in the foregoing method embodiment 500 to method embodiment 900. The sending module 1103 is configured to perform sending-related operations of the terminal devices in the foregoing method embodiment 500 to method embodiment 900.

In an embodiment, the communication apparatus 1100 may be configured to perform operations of the terminal devices in FIG. 5 to FIG. 9. For example:
the receiving module 1101 is configured to periodically receive a first SSB signal, and periodically receive a second SSB signal based on first indication information.

The sending module 1103 is configured to send first indication information to a network device, where the first indication information indicates to send a second SSB signal, and a transmission periodicity of the second SSB signal is less than a transmission periodicity of the first SSB signal.

The processing module 1102 is configured to stop periodically receiving the first SSB signal, and start to receive the second SSB signal.

It should be understood that a specific process in which the modules perform the foregoing corresponding steps has been described in detail in the foregoing method embodiments. For brevity, details are not described herein again.

In addition, the receiving module 1101, the processing module 1102, and the sending module 1103 in the communication apparatus 1100 may further implement other operations or functions of the terminal device in the foregoing methods. Details are not described herein again.

Optionally, the communication apparatus 1100 may be a device including a terminal device, or may be a component configured in the terminal device, for example, a chip of the terminal device. In this case, the receiving module 1101 and the sending module 1103 may be interface circuits, pins, or the like. Specifically, an interface circuit may include an input circuit and an output circuit. The receiving module 1101 may include an input circuit, the sending module 1103 may include an output circuit, and the processing module 1102 may include a processing circuit.

FIG. 12 is a diagram of a structure of a communication apparatus 1200 according to an embodiment of this application. The communication apparatus 1200 includes a processor 1201 and a memory 1202. The memory 1202 is coupled to the processor 1201. The processor 1201 is configured to execute a computer program or instructions and/or data stored in the memory 1202, so that one of the method 300 to the method 800 in the foregoing method embodiments is performed. The memory 1202 is configured to store the computer program or instructions and/or data. The coupling in this embodiment of this application may be an indirect coupling or a communication connection between apparatuses, units, or modules in an electrical form, a mechanical form, or another form, and is used for information exchange between the apparatuses, the units, or the modules. The processor 1201 may cooperate with the memory 1202.

Optionally, the communication apparatus 1200 may include one or more processors 1201, and may include one or more memories 1202.

Optionally, the memory 1202 may be integrated with or arranged separately from the processor 1201.

The communication apparatus 1200 may further include a transceiver 1203, configured to perform information interaction through a transmission medium. Optionally, the transceiver 1203 may be an interface, a bus, a circuit, or an apparatus that can implement sending and receiving functions.

Optionally, a device configured to implement the receiving function in the transceiver 1203 may be considered as a receiving module, and a device configured to implement the sending function in the transceiver 1203 may be considered as a sending module. To be specific, the transceiver 1203 includes a receiver and a sender.

A specific connection medium between the processor 1201, the memory 1202, and the transceiver 1203 is not limited in embodiments of this application. In embodiments of this application, in FIG. 12, the processor 1201, the memory 1202, and the transceiver 1203 are connected through buses 1204. The buses are represented by thick lines in FIG. 12. A manner of connection between other components is merely an example description, and is not limited thereto. The buses may be classified into an address bus, a data bus, a control bus, and the like.

It should be understood that for ease of representation, only one thick line is used for representing the bus in FIG. 12, but this does not mean that only one bus or only one type of bus is provided.

Optionally, as shown in FIG. 12, the communication apparatus 1200 may further include a transceiver 1203 and/or a communication interface. The transceiver 1203 and/or the communication interface are/is configured to receive and/or send a signal. For example, the processor 1201 is configured to control the transceiver 1203 and/or the communication interface to receive and/or send data.

The transceiver may sometimes be alternatively referred to as a transceiver machine, a transceiver module, a transceiver circuit, or the like. The receiver may sometimes be alternatively referred to as a receiver machine, a receiving module, a receiver circuit, or the like. The sender may sometimes be alternatively referred to as a sending set, a transmitter, a transmitting module, a transmitting circuit, or the like.

For example, in an embodiment, the processor 1201 is configured as another operation or function of a chip of a network device. The transceiver 1203 is configured to implement information interaction between the communication apparatus 1200 and a terminal device.

In another embodiment, the processor 1201 is configured as another operation or function of a chip of a terminal device. The transceiver 1203 is configured to implement information interaction between the communication apparatus 1200 and a network device.

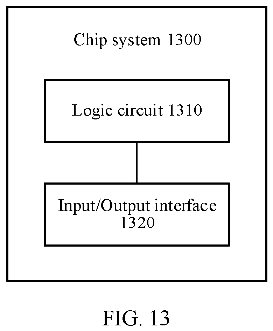

FIG. 13 is a diagram of a chip system 1300 according to an embodiment of this application. The chip system 1300 (which may be alternatively referred to as a processing system) includes a logic circuit 1310 and an input/output interface (input/output interface) 1320.

The logic circuit 1310 may be a processing circuit in the chip system 1300. The logic circuit 1310 may be coupled and connected to a storage unit, and invoke instructions in the storage unit, so that the chip system 1300 can implement the methods and the functions in embodiments of this application. The input/output interface 1320 may be an input/output circuit in the chip system 1300, and outputs information processed by the chip system 1300, or inputs to-be-processed data or signaling information into the chip system 1300 for processing.

Optionally, the logic circuit 1310 may be implemented by one or more processors, including the one or more processors or a processing part of the one or more processors.

Optionally, the input/output interface 1320 may include a transceiver circuit, a transceiver, an input/output circuit, or a communication interface.

As a solution, the chip system 1300 is configured to implement the operations performed by the network device or the terminal device in the foregoing method embodiments.

Specifically, the logic circuit 1310 is configured to implement the processing-related operations performed by the network device or the terminal device in the foregoing method embodiments, and the input/output interface 1320 is configured to implement the sending-related operation and/or the receiving-related operation performed by the network device or the terminal device in the foregoing method embodiments.

Embodiments of this application further provide a computer-readable storage medium. The computer-readable storage medium stores computer instructions used for implementing the method performed by the network device or the terminal device in the foregoing method embodiments.

For example, the computer program, when executed by a computer, causes the computer to implement the method performed by the network device or the terminal device in the foregoing method embodiments.

Embodiments of this application further provide a computer program product, including instructions. When the instructions are executed by a computer, the method performed by the network device or the terminal device in the foregoing method embodiments is implemented.

Embodiments of this application further provide a communication system. The communication system includes the terminal device and/or the network device in the foregoing embodiments. For example, the system includes the terminal device and the network device in FIG. 1.

For explanations and beneficial effects of related content in any one of the apparatuses provided above, refer to the corresponding method embodiment provided above. Details are not described herein again.

In several embodiments provided in this application, it should be understood that the disclosed apparatus and method may be implemented in other manners. For example, the described apparatus embodiment is merely an example. For example, division into the units is merely logical function division, and may be another division during actual implementation. For example, a plurality of units or components may be combined or integrated into another system, or some features may be ignored or not executed. In addition, the displayed or discussed mutual coupling or direct coupling or communication connections may be implemented through some interfaces. The indirect coupling or communication connections between the apparatuses or units may be implemented in electronic, mechanical, or other forms.

All or some of the foregoing embodiments may be implemented through software, hardware, firmware, or any combination thereof. During implementation through software, all or some of embodiments may be implemented in a form of a computer program product. The computer program product includes one or more computer instructions. When the computer program instructions are loaded and executed on a computer, all or some of the procedures or functions according to embodiments of this application are generated. The computer may be a general-purpose computer, a dedicated computer, a computer network, or another programmable apparatus. For example, the computer may be a personal computer, a server, or a network device. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, and microwave, or the like) manner. The computer-readable storage medium may be any usable medium accessible by the computer, or a data storage device such as a server or a data center integrating one or more usable media. The usable medium may be a magnetic medium (for example, a floppy disk, a hard disk, or a magnetic tape), an optical medium (for example, a DVD), or a semiconductor medium (for example, a solid state disk (solid state disk, SSD)), or the like. For example, the usable medium includes but is not limited to: various media that can store program code, such as a USB flash drive, a removable hard disk, a read-only memory (read-only memory, ROM), a random access memory (random access memory, RAM), a magnetic disk, or a compact disc.

The foregoing descriptions are merely specific implementations of this application, but the protection scope of this application is not limited thereto. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
sending a first synchronization signal and physical broadcast channel block SSB signal periodically;
receiving first indication information from a terminal device, wherein the first indication information indicates to send a second SSB signal periodically, and a transmission periodicity of the second SSB signal is less than a transmission periodicity of the first SSB signal; and
sending the second SSB signal based on the first indication information periodically.

2. The communication method according to claim 1, wherein the first indication information is a wake-up signal WUS, or the first indication information is a sounding reference signal SRS, or the first indication information is carried on an uplink physical channel.

3. The communication method according to claim 1 or 2, further comprising:
sending configuration information of the second SSB signal to the terminal device.

4. The communication method according to claim 3, wherein the sending the configuration information of the second SSB signal to the terminal device comprises:
sending multiple pieces of first configuration information to the terminal device; and
sending second indication information to the terminal device, wherein the second indication information indicates that one of the multiple pieces of first configuration information is the configuration information of the second SSB signal.

5. The communication method according to claim 4, wherein the second indication information is carried in a medium access control control element MAC CE or carried in downlink control information DCI.

6. The communication method according to claim 4 or 5, wherein each of the multiple pieces of first configuration information comprises a transmission periodicity of an SSB signal and identification information corresponding to each piece of first configuration information, and the second indication information is identification information corresponding to one of the multiple pieces of first configuration information.

7. The communication method according to claim 6, wherein each piece of first configuration information further comprises SSB-based measurement timing configuration SMTC information.

8. The communication method according to any one of claims 4 to 7, wherein the multiple pieces of first configuration information are carried in a plurality of radio resource control RRC messages.

9. The communication method according to any one of claims 1 to 8, further comprising:
sending a third SSB signal periodically, wherein a transmission periodicity of the third SSB signal is greater than the transmission periodicity of the second SSB signal.

10. The communication method according to any one of claims 1 to 9, wherein the transmission periodicity of the first SSB signal is one of 320 ms, 480 ms, and 640 ms.

11. The communication method according to any one of claims 1 to 10, wherein the transmission periodicity of the second SSB signal is 5 ms.

12. A communication method, comprising:
receiving a first synchronization signal and physical broadcast channel block SSB signal periodically;
sending first indication information to a network device, wherein the first indication information indicates to send a second SSB signal, and a transmission periodicity of the second SSB signal is less than a transmission periodicity of the first SSB signal; and
receiving the second SSB signal periodically based on the first indication information.

13. The communication method according to claim 12, wherein the first indication information is a wake-up signal WUS, or the first indication information is a sounding reference signal SRS, or the first indication information is carried on an uplink physical channel.

14. The communication method according to claim 12 or 13, further comprising:
receiving configuration information of the second SSB signal from the network device.

15. The communication method according to claim 14, wherein the receiving the configuration information of the second SSB signal from the network device comprises:
receiving multiple pieces of first configuration information from the network device; and
receiving second indication information from the network device, wherein the second indication information indicates that one of the multiple pieces of first configuration information is the configuration information of the second SSB signal.

16. The communication method according to claim 15, wherein the second indication information is carried in a medium access control control element MAC CE or carried in downlink control information DCI.

17. The communication method according to claim 15 or 16, wherein each of the multiple pieces of first configuration information comprises a transmission periodicity of an SSB signal and identification information corresponding to each piece of first configuration information, and the second indication information is identification information corresponding to one of the multiple pieces of first configuration information.

18. The communication method according to claim 17, wherein each piece of first configuration information further comprises SSB-based measurement timing configuration SMTC information.

19. The communication method according to any one of claims 15 to 18, wherein the multiple pieces of first configuration information are carried in a plurality of radio resource control RRC messages.

20. The communication method according to any one of claims 12 to 19, further comprising:
receiving a third SSB signal periodically, wherein a transmission periodicity of the third SSB signal is greater than the transmission periodicity of the second SSB signal.

21. The communication method according to any one of claims 12 to 20, wherein the transmission periodicity of the first SSB signal is one of 320 ms, 480 ms, and 640 ms.

22. The communication method according to any one of claims 12 to 21, wherein the transmission periodicity of the second SSB signal is 5 ms.

23. A communication apparatus, comprising a module or a unit configured to perform the method according to any one of claims 1 to 11, or comprising a module or a unit configured to perform the method according to any one of claims 12 to 22.

24. A communication apparatus, comprising a processor and an interface circuit, wherein the interface circuit is configured to receive a signal from a communication apparatus other than the communication apparatus and transmit the signal to the processor, or send a signal from the processor to a communication apparatus other than the communication apparatus, and the processor is configured to implement the method according to any one of claims 1 to 11 by using a logic circuit or by executing code instructions, or the processor is configured to implement the method according to any one of claims 12 to 22 by using a logic circuit or by executing code instructions.

25. A computer-readable storage medium, wherein the storage medium stores a computer program or instructions, and when the computer program or the instructions are executed by a communication apparatus, the method according to any one of claims 1 to 11 or the method according to any one of claims 12 to 22 is implemented.

26. A computer program product, comprising a computer program, wherein when the computer program is run, the method according to any one of claims 1 to 11 or the method according to any one of claims 12 to 22 is implemented.

27. A chip, comprising a processor, wherein the processor is coupled to a memory, the memory is configured to store a computer program, and the processor is configured to execute the computer program stored in the memory to implement the method according to any one of claims 1 to 11, or the processor is configured to execute the computer program stored in the memory to implement the method according to any one of claims 12 to 22.
